# EUROPEAN PATENT SPECIFICATION

(11) **EP 3 351 325 B1**
(45) Date of publication and mention of the grant of the patent: **20.11.2019**
(21) Application number: 16846422.0
(22) Date of filing: 12.09.2016
(51) Int. Cl.: B23B 19/02, B23Q 11/12, C10M 109/00, C10M 121/02, C10M 159/06, F16C 19/16, F16C 33/66, F16N 7/38, F16N 13/22, F16N 15/00, C10N 20/00, C10N 30/00, C10N 40/02, C10N 50/10

(54) **SPINDLE DEVICE AND MACHINE TOOL**
SPINDELVORRICHTUNG UND WERKZEUGMASCHINE
DISPOSITIF DE BROCHE ET MACHINE-OUTIL

(30) Priority: 15.09.2015 JP 2015181633
(43) Date of publication of application: 25.07.2018
(73) Proprietor: NSK Ltd., Tokyo 141-8560 (JP)
(72) Inventor: INAGAKI, Yoshifumi, Fujisawa-shi Kanagawa 252-0811 (JP); NAKAMURA, Shinya, Fujisawa-shi Kanagawa 252-0811 (JP); KATSUNO, Yoshiaki, Fujisawa-shi Kanagawa 251-8501 (JP)
(74) Representative: Grünecker Patent- und Rechtsanwälte PartG mbB
(86) International application number: PCT/JP2016/076841
(87) International publication number: WO 2017/047551

(56) References cited:
- EP-A1- 2 886 893
- JP-A- H05 171 172
- JP-A- H05 171 172
- JP-A- S54 120 606
- JP-A- 2002 161 922
- JP-A- 2002 161 922
- JP-A- 2006 022 865

## Description

### TECHNICAL FIELD

The present invention relates to a spindle device and a machine tool configured to periodically supply a novel lubricating agent to a rolling bearing for spindle support by a predetermined amount,.

### RELATED ART

In recent years, since speed-up of a spindle device for machine tool has been remarkably developed and environmental measure, energy saving and resource saving have been also strongly needed, grease lubrication has been adopted as a lubrication method of a bearing. As the grease lubrication, a lubrication method of using grease enclosed in advance in a bearing space of the bearing and a lubrication method of replenishing grease from a grease replenishing means provided outside a housing at appropriate timing have been known.

For example, in a spindle device disclosed in Patent Document 1, a slight amount of grease is replenished at appropriate timing from a grease replenishing means provided outside a housing into a bearing space of a rolling bearing through a supply pipe and a supply path formed in the housing.

Also, in general, when incorporating the bearing into the spindle device, the bearing having the grease enclosed therein is inserted into a spindle with being warmed within a range of 80°C or below. Also, after assembling the spindle device, a pre-conditioning interim operation of the bearing is performed at an early stage so as to prevent abnormal heating due to biting or stirring resistance of the grease upon high-speed rotation. Patent Document 2 discloses a spindle device according to the preamble of appended claim 1.

### Citation List

### Patent Documents

Patent Document 1: Japanese Patent No. 4,051,563B
Patent Document 2: Japanese Patent Application No. 2002 161922.

### SUMMARY OF THE INVENTION

### Problems To Be Solved

In the spindle device disclosed in Patent Document 1, an amount of a grease composition that is to be supplied to the rolling bearing is very small. For this reason, when the supply path is long, is bent on the way, has portions bent at right angle at some places, and the like, relatively rigid grease of which consistency is small is difficult to be stably supplied to the rolling bearing due to a piping resistance. Also, when the grease is used for a long time, a thickening agent is solidified by a pressure repetitively applied upon pneumatic transportation, so that it is also difficult to stably supply the grease composition by a predetermined amount.

The present invention has been made in view of the above situations, and an object thereof is to provide a long-life spindle device and a machine tool capable of stably supplying a lubricating agent from a lubricating agent supply device to a rolling bearing even upon operation while maintaining a handling property upon incorporation of a bearing or upon pre-conditioning interim operation of the bearing.

### Means for Solving Problems

The above object of the present invention is accomplished by following configurations.
(1) A spindle device including:
   a spindle,
   a housing,
   a rolling bearing configured to rotatably support the spindle to the housing, and
   a lubricating agent supply device configured to supply a lubricating agent to the rolling bearing via a supply path provided in the housing,
   wherein the lubricating agent that is to be supplied from the lubricating agent supply device is a wax-based lubricating agent containing a lubricating oil and a wax and capable of reversibly changing between a liquid state when a temperature exceeds a liquefaction point and a semi-solid state when the temperature does not exceed the liquefaction point, the liquefaction point being a predetermined temperature within a temperature range of 25°C to 60°C, and
   wherein a grease including a base oil component, which has an infiltrative property and affinity with the wax-based lubricating agent, is enclosed in a bearing space of the rolling bearing.
(2) The bearing device of the above (1), wherein ratios of the lubricating oil and the wax of the wax-based lubricating agent are 4 to 40 mass% of wax and 96 to 60 mass% of lubricating oil with respect to a total amount of the lubricating oil and the wax.
(3) A machine tool including the spindle device of the above (1) or (2).

In the meantime, the term "wax-based lubricating agent" indicates a lubricating agent including lubricating oil and wax, and the term "liquefaction point" indicates a temperature at which the wax-based lubricating agent reversibly changes from a semi-solid state to a liquid state or from the liquid state to the semi-solid state. Also, the "liquefaction point" conforms to Article 69(2) (definition of liquid state) of Miscellaneous Provisions of Chapter 12 of Rules on Regulation of Hazardous Objects, in Japan, for example.

### Effects of the Invention

The wax-based lubricating agent that is to be used for the present invention does not contain a thickening agent. Therefore, a problem that the thickening agent is solidified to cause a supply trouble of the wax-based lubricating agent from the lubricating agent supply device to the rolling bearing does not occur. For this reason, in the spindle device of the present invention, the wax-based lubricating agent is stably supplied for a long time, as compared to the grease supply method. Also, the wax-based lubricating agent contains the lubricating oil and the wax, both of which are lubricating components. Therefore, it is possible to reduce a replenishing amount of the wax-based lubricating agent per one time and to prolong a replenishing interval, so that it is possible to reduce an amount of consumption of the wax-based lubricating agent and to replenish the same over a longer duration. Also, the wax may be added as an oiliness improver of the lubricating oil and the grease, in some cases. However, since the wax is contained more than a general additive amount, operations similar to the thickening agent of the grease are expressed, so that it is possible to use a lubricating agent supply device for grease, as it is.

Also, since the grease including the base oil component, which has the infiltrative property and affinity with the wax-based lubricating agent, is enclosed in the bearing space of the rolling bearing, it is possible to maintain a handling property upon incorporation of the bearing or upon early pre-conditioning interim operation of the bearing.

Therefore, as described above, when the wax-based lubricating agent, and the grease including the base oil component, which has the infiltrative property and affinity with the wax-based lubricating agent, are used for the spindle device, it is possible to stably supply the lubricating agent from the lubricating agent supply device to the rolling bearing even upon operation while maintaining the handling property upon incorporation of the bearing or upon early pre-conditioning interim operation of the bearing.

### BRIEF DESCRIPTOIN OF THE DRAWINGS

FIG. 1 is a schematic view depicting an example of a spindle device.
FIG. 2 is an enlarged view of a II part of FIG. 1.
FIG. 3 is a view for illustrating a liquefaction point.
FIG. 4 is a view for illustrating a process of inserting a bearing into the spindle.
FIG. 5A is a view corresponding to FIG. 2, depicting a spindle device of a modified embodiment, and FIG. 5B is a view corresponding to FIG. 2, depicting a spindle device of another modified embodiment.

### DETAILED DESCRIPTION OF EMBODIMENTS

Hereinafter, a spindle device that is to be applied to a machine tool in accordance with an embodiment of the present invention will be described in detail with reference to the drawings.

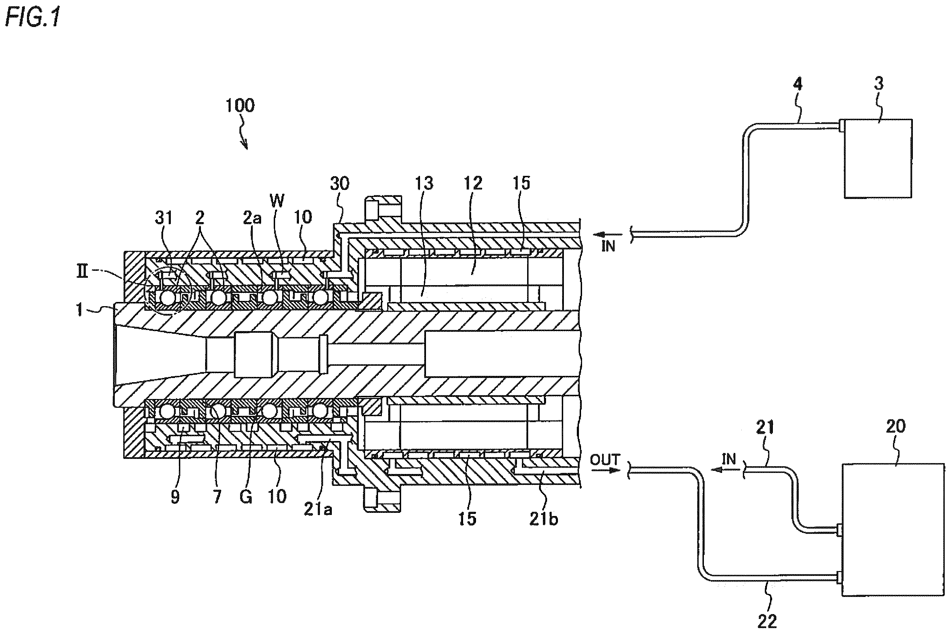

As shown in FIG. 1, a spindle device 100 includes a spindle 1 to which a tool can be mounted, a housing 30, and a plurality of rolling bearings 2 configured to rotatably support the spindle I to the housing 30. The spindle 1 is configured to be rotatively driven by a motor provided at an axially intermediate part of the spindle 1 and having a stator 12 and a rotor 13. Meanwhile, in FIG. 1, only front-side bearings of the rolling bearings 2 are shown, and rear-side bearings opposite to the front-side bearings with respect to the motor are not shown.

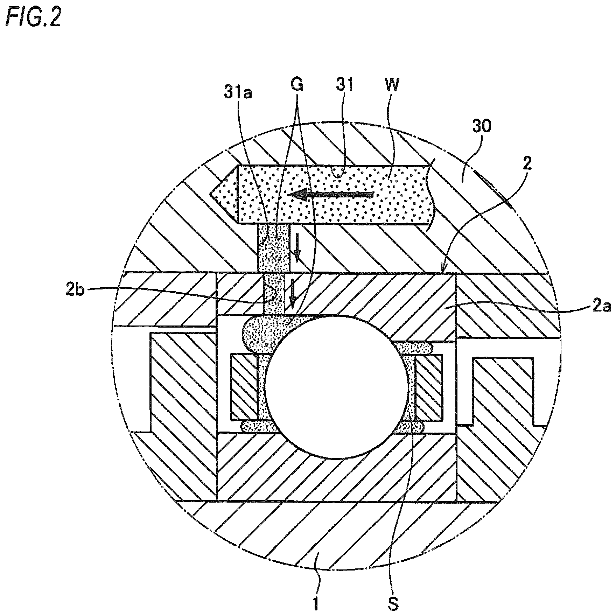

Also, the spindle device 100 further includes a lubricating agent supply device 3 provided outside the housing 30, and is configured to periodically supply a wax-based lubricating agent W from the lubricating agent supply device 3 to each rolling bearing 2 via a plurality of supply pipes 4 and a plurality of supply paths 31 formed in the housing 30 by a predetermined amount. Each supply path 31 in the housing 30 has a supply hole 31a (refer to FIG. 2) provided at a terminal end portion (a downstream-side end portion) thereof and configured to communicate with a replenishing hole 2b provided at an outer ring 2a of each rolling bearing 2, so that the wax-based lubricating agent W is uniformly supplied to each rolling bearing 2.

In the meantime, the lubricating agent supply device 3 of the embodiment has a tank having a cylinder structure and configured to store therein a lubricating agent. When a pressure (for example, a pneumatic pressure) is applied to an inside of the tank from the outside, the lubricating agent is discharged to a piping (in a fixed quantity).

The wax-based lubricating agent W has a lubricating oil and a wax, as basic components. However, while the wax is crystallized into a three-dimensional mesh structure shape in the lubricating oil at a temperature below a melting point thereof and flowability thereof is lost, the wax becomes a liquid state at a temperature at or above the melting point. If the wax is a single component, it reversibly changes between a semi-solid state and a liquid state at temperatures close to the melting point of wax as a boundary, as a whole. In contrast, the wax-based lubricating agent W of the present invention is a mixture (a dilute solution where the lubricating oil (a diluting liquid) is added to the wax (solvent)) of the lubricating oil (liquid) and the wax (semi-solid). Regarding this, it was found by the present invention that a temperature (hereinafter, referred to as "liquefaction point") at which the wax-based lubricating agent reversibly changes between the semi-solid state and the liquid state as a whole has a close relation with the melting point of wax to be included but a relation of "melting point of wax>liquefaction point" is formed by a mixing ratio between the wax and the lubricating oil. Also, it was found that a temperature difference of about 10°C to 30°C between the melting point of wax and the liquefaction point occurs by the lubricating oil and the wax and the mixing ratio therebetween. In the present invention, the liquefaction point is set to 25°C to 60°C, in consideration of the supply to the rolling bearing 2 of the spindle device 100.

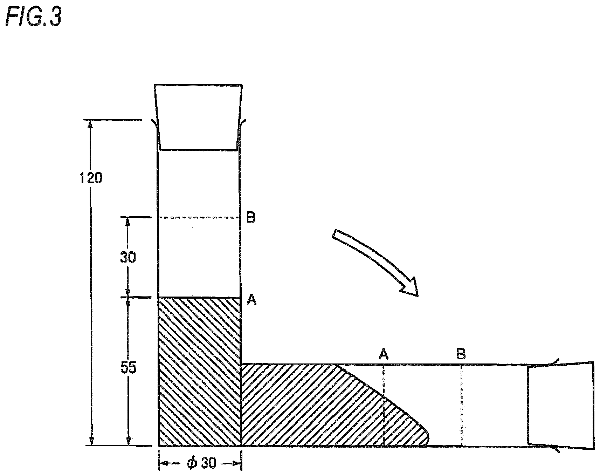

In the meantime, the liquefaction is checked as shown in FIG. 3. This method conforms to Article 69(2) (definition of liquid state) of Miscellaneous Provisions of Chapter 12 of Rules on Regulation of Hazardous Objects, in Japan.
(1) A test article (wax-based lubricating agent) is put to an A line (height 55mm) of two test tubes (a diameter 30mm, a height 120mm).
(2) One test tube (test tube for liquid state determination) is tightly closed by a rubber plug having no hole.
(3) The other test tube (test tube for temperature measurement) is tightly closed by a rubber plug having a thermometer attached thereto. In the meantime, the thermometer is inserted so that a tip end thereof is located at a depth of 30mm below a surface of the test article and is erected with respect to the test tube.
(4) The two test tubes are left to erectly stand in a constant temperature bath kept at liquid state check temperature±0.1°C so that a B line (located at a position of 30 mm above the surface of the test article) is located below the water surface of the constant temperature bath.
(5) After the temperature of the test article in the test tube for temperature measurement becomes the liquid state check temperature±0.1°C, the state is kept at it is.
(6) The test tube for liquid state determination is taken out from the constant temperature bath onto a horizontal table with being erected, and immediately, is horizontally fell down onto the table, and the time for which the tip end of the test article reaches the B line is measured.
(7) When the time for which the tip end of the test article reaches the B line is within 90 seconds, it is determined that the test article is "liquid state".
(8) The above processes (1) to (7) are performed while diversely changing the temperature of the constant temperature bath, and the temperature at which the test article becomes in a liquid state is determined as "liquefaction point".

In the meantime, the liquefaction point is not a fixed temperature such as a solidification point of water (0°/pure water under atmospheric pressure) and is defined and digitized within a range of about ±2° with respect to any specific temperature.

As long as the wax-based lubricating agent W has the above properties, any lubricating oil and wax can be used without limits. However, as the lubricating oil, a variety of oils that have been used to lubricate the bearing in the related art can be used. For example, paraffin-based and naphthene-based mineral oils or synthetic oils such as ester oil, hydrocarbon oil, ether oil and the like can be used, and a plurality of types thereof can be used with being mixed. Also, the viscosity of the lubricating oil doesn't matter inasmuch as it is within a general range. However, the kinetic viscosity at 40°C is preferably 5 to 200mm²/s, considering the lubricating property for the rolling bearing 2. In the meantime, regarding the wax, any type of natural wax and synthetic wax can be used. However, since the wax becomes a liquid state and also becomes a mixture with the lubricating oil in the bearing, wax having high compatibility with the lubricating oil is preferably used. As the natural wax, all types of animal and plant waxes, mineral wax and petroleum wax can be used. As the synthetic wax, Fisher-Tropsch wax, polyethylene wax, fat and oil-based synthetic wax (ester, ketone, amid), hydrogenated wax and the like can be exemplified. A plurality of types thereof can be used with being mixed. The temperature at which the wax-based lubricating agent W reversibly changes between the liquid state and the semi-solid state is substantially determined by the melting point of the wax. Therefore, the wax is selected from the waxes exemplified in the above so that the liquefaction point becomes 25°C to 60°C, and the lubricating oil and the wax are prepared with an appropriate mixing ratio.

Also, ratios of the lubricating oil and the wax are preferably 4 to 40 mass% of wax and 96 to 60 mass% of lubricating oil with respect to a total amount of the lubricating oil and the wax. The greater the ratio of the wax, the flowability is deteriorated at the semi-solid state of the wax-based lubricating agent W. When the ratio of the wax exceeds 40 mass%, the dispensing property from the lubricating agent supply device 3, the transportation property in the supply pipe 4 and the supply path 31 is deteriorated, and the transportation property is also deteriorated when it is discharged after lubrication (which will be described later). In the meantime, the wax may be added as an oiliness improver of the lubricating oil and the grease. However, in the wax-based lubricating agent W of the present invention, the additive amount of the wax is set greater than a general additive amount, as described above, so that it is possible to keep a function as the thickening agent (a property of the semi-solid state equivalent to the grease).

Although a melting point of a microcrystalline wax is 67°C to 98°C, the liquefaction point of the wax-based lubricating agent W mixed with the lubricating oil on the basis of the above mixing ratio can be set to 25°C to 60°C. Also, although a melting point of a paraffin wax is 47°C to 69°C, the liquefaction point of the wax-based lubricating agent W mixed with the lubricating oil on the basis of the above mixing ratio can be set to 25°C to 35°C.

Also, a variety of additives may be added to the wax-based lubricating agent W, depending on purposes. For example, appropriate amounts of well-known antioxidant, antirust agent, extreme pressure agent and the like may be added.

Also, in general, the liquefaction point of 25°C to 60°C is appropriate, considering an environmental temperature around the bearing and an operating temperature of the bearing. However, when the application utility is a rolling bearing for machine tool (a rolling bearing for spindle of a machine tool, a rolling bearing for support of a ball screw shaft end or the like), the liquefaction point is preferably 30°C to 60°C, and more preferably 40°C to 60°C. The reason is described, as follows.

Regarding the surrounding environment conditions at which a machine tool is to be used, the surrounding environment is air-conditioned to about 20 to 25 °C so as to suppress thermal displacement of a member associated with a change in the surrounding temperature to the minimum and to secure the processing precision of a component to be processed, in many cases. Therefore, when the lower limit of the liquefaction point is set to 30°C, the wax-based lubricating agent W is at the temperature at or below the liquefaction point at the stationary state, so that it is not liquefied and is kept in the bearing or at an oil reserving part. Even when the bearing or spindle in which the wax-based lubricating agent W is reserved is stopped or is stock-kept as it is stationary, since the wax-based lubricating agent is kept in the bearing and at the peripheral part thereof without being liquefied, the lubrication function is not deteriorated for a long time, like the usual grease. Therefore, the liquefaction point is preferably set to 30°C to 60°C.

Also, an inside temperature of the bearing increases as the number of rotations increases. Therefore, in order to keep the appropriate lubrication state, it is necessary to supply more lubricating oil to the rolling contact surface. In the case of a continuous operation at the usual rotation condition (rotation areas of low to medium speeds) or an operating condition of alternately repeating low speed rotation and highest speed rotation, the bearing temperature is usually 40°C or below, and an amount of the lubricating oil can be sufficiently secured by the lubricating agent in the vicinity of the rolling contact surface.

However, in the case of the continuous processing at the highest speed rotation or when continuously performing heavy cutting processing even though the number of rotations is small, the bearing temperature may exceed 40°C. In this case, the lubricating oil on the rolling contact surface may be insufficient. For this reason, the lower limit of the liquefaction point is set to 40°C at which the wax-based lubricating agent around the bearing is liquefied and the insufficient lubricating oil can be replenished to the rolling contact surface, so that it is possible to prevent an unexpected seizure problem and the like before happens. Therefore, the liquefaction point is more preferably set to 40°C to 60°C.

For example, as the wax-based lubricating agent W having the liquefaction point of 47°C, a lubricating agent including diester oil (dioctyl sebacate) 78.5 mass%, a microcrystalline wax 15 mass% and an additive 6.5 mass% including an antioxidant, an extreme pressure agent and the other may be exemplified. Also, as the wax-based lubricating agent W having the liquefaction point of 38°C, a lubricating agent including diester oil (dioctyl sebacate) 83 mass%, microcrystalline wax 10.5 mass% and an additive 6.5 mass% including an antioxidant, an extreme pressure agent and the other may be exemplified

In the meantime, an example of component ratios of the base oil, the wax component and the additives of the wax-based lubricating agent having the liquefaction point of 25°C and 60°C can be inferred to values shown in Table I by using a proportion interpolation calculation method or the line, based on component ratios at liquefaction points of 38°C and 47°C.

**[Table 1]**

| | | | | |
|---|---|---|---|---|
| liquefaction point | 47°C | 38°C | 25°C | 60°C |
| base oil (mass%) | 78.5 | 83 | 89.5 | 72.5 |
| wax (mass%) | 15 | 10.5 | 4 | 21 |
| additives other (mass%) | 6.5 | 6.5 | 6.5 | 6.5 |

In order to prepare the wax-based lubricating agent W, the wax is heated to the melting point or higher for liquefaction, and the lubricating oil or the lubricating oil having the additive added thereto is applied to the heated wax, which are then sufficiently mixed. Thereafter, the mixture is cooled to a temperature (usually, a room temperature) below the melting point of wax. Alternatively, a method may be adopted in which the lubricating oil or the lubricating oil having the additive added thereto and the solid wax are put into a suitable vessel, which are entirely heated and mixed to the melting point or higher of wax and then cooled.

The wax-based lubricating agent W was stored in the lubricating agent supply device 3 of the general spindle device as shown in FIG. 1, as it was in the semi-solid state, and a predetermined amount was periodically and continuously supplied to the rolling bearing 2. As a result, there was no plugging of the supply path and discharge path, and the wax-based lubricating agent W could be stably supplied to the rolling bearing.

The wax-based lubricating agent W is stored in the semi-solid state without heating the lubricating agent supply device 3, and a predetermined amount is discharged in the semi-solid state to the supply pipe 4. Since both the lubricating oil and the wax forming the wax-based lubricating agent W are lubricating components and are in the semi-solid state, it is possible to use a conventional lubricating agent supply device for grease composition as it is, and to circulate the lubricating oil and the wax even in the semi-solid state in the supply pipe 4 and the supply path 31.

In order to supply the wax-based lubricating agent W from the lubricating agent supply device 3 into the rolling bearing 2, it is necessary to introduce the wax-based lubricating agent W in the liquid state through the replenishing hole 2b formed in the outer ring 2a of the rolling bearing 2. As described above, the wax-based lubricating agent W from the lubricating agent supply device 3 circulates in the semi-solid state inside the supply pipe 4 and the supply path 31. However, during the operation of the spindle device 100, the rolling bearing 2 is at high temperatures, and the liquefaction point is set to 25°C to 60°C, as described above, so that the vicinity of the tip end of the supply path 31 coupling to the replenishing hole 2b of the outer ring 2a is at temperatures sufficiently higher than the temperature and the wax-based lubricating agent W changes to the liquid state while passing therethrough and is thus easily introduced into the bearing.

In the rolling bearing 2, the wax-based lubricating agent W is in the liquid state but does not contain the thickening agent, and both the lubricating oil and the wax are lubricating components. Therefore, the wax-based lubricating agent becomes the same state as a lubricating agent in which a ratio of the base oil in the grease composition is increased, and the lubricating performance becomes higher than the grease composition. For this reason, since it is possible to reduce the replenishing amount per one time and to prolong the replenishing interval, it is possible to reduce the amount of consumption of the wax-based lubricating agent W and the number of replenishing times into the lubricating agent supply device 3, so that it is possible to save the operating cost of the spindle device 100.

After the lubrication is over, the wax-based lubricating agent W is discharged to a lubricating agent storing groove 9 provided next to the rolling bearing 2 by the centrifugal force resulting from rotation of a spacer 7. Since the lubricating agent storing groove 9 is provided outside the rolling bearing 2, a temperature thereof is lower than the inside of the bearing, and the discharged wax-based lubricating agent W again changes to the semi-solid state and is sent to the outside of the housing 30. In the grease composition, residues originating from the thickening agent due to the long-term use are generated in the lubricating agent storing groove 9 and block the flow of air, so that the temperature of the bearing may be increased. However, even after the wax-based lubricating agent W is discharged from the rolling bearing 2, it is discharged in the liquid state to some distance, so that the above problem is not caused.

In the meantime, it is possible to reduce the amount of consumption of the wax-based lubricating agent W, as compared to the grease. Therefore, when it is possible to sufficiently secure a volume of the lubricating agent storing groove 9, as compared to the lubricating agent to be discharged, it is not necessary to discharge the wax-based lubricating agent to the outside of the housing, which is more favorable in light of the environment performance.

In the meantime, the spindle device 100 can be diversely changed. For example, preferably, an outer side of each outer ring 2a of the housing 30 is provided with a spiral cooling path 10 to circulate a cooling liquid, and upon the operation, the bearing temperature is lowered to about to 40°C to 50°C so that the rolling bearing 2 is not to be seized. Also, the temperatures of the rolling bearing 2 and the spindle 1 due to the heat generation from the stator 12 and the rotor 13 of the motor increase and the rotation precision may be lowered due to the thermal expansion. Therefore, preferably, an outer side of the rotor 13 is provided with a spiral cooling path 15 to circulate the cooling liquid for cooling. For the cooling of the rolling bearing 2 and the spindle 1, the supply pipe 21 from the cooling liquid supply device 20 provided outside the housing 30 is branched into a supply path 21a for bearing cooling and a supply path 21b for spindle cooling in the housing 30, and the cooling liquid is supplied into the respective supply paths, is circulated in both the supply paths 21a, 21b, and is then returned to the cooling liquid supply device 20 through a discharge pipe 22. Also, cooling mechanisms for rolling bearing and spindle may be separately provided.

At this time, the wax-based lubricating agent W has different liquefaction points, depending on composition thereof. However, when the supply path 31 from the lubricating agent supply device 3 is piped in the vicinity of the cooling paths 10, 15, and the cooling temperatures of the cooling paths 10, 15 are controlled, it is possible to transport the diverse wax-based lubricating agents W in the semi-solid state through the supply path 31. Also, it is possible to adjust the temperature of the lubricating agent storing groove 9 by the cooling temperatures of the cooling paths 10, 15, and to discharge the diverse wax-based lubricating agents W in the semi-solid state after the lubrication.

In the embodiment, as shown in FIG. 2, at a point of time at which the spindle device 100 has been assembled, i.e., at a state before the pre-conditioning interim operation, a grease G, which includes a base oil component having an infiltrative property and affinity with the wax-based lubricating agent W, is enclosed in a bearing space S of the rolling bearing 2, including the replenishing hole 2b of the outer ring 2a.

Also, in the supply path 31 of the housing 30, a part except for the supply hole 31a of the terminal end portion coupling to the replenishing hole 2b is filled with the wax-based lubricating agent W in advance, and the supply hole 31a of the terminal end portion is enclosed therein with the grease G, which includes the base oil component having the infiltrative property and affinity with the wax-based lubricating agent W.

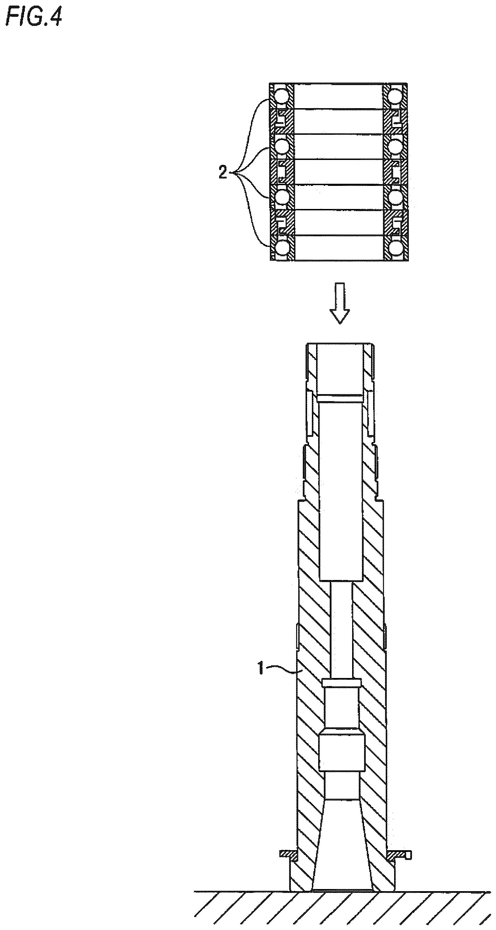

Herein, as shown in FIG. 4, when incorporating the bearings upon the assembling of the spindle device 100, the plurality of rolling bearings 2 is inserted into the spindle 1 with being warmed within a range of 80°C or below. At this time, if the wax-based lubricating agent W is enclosed in the bearing space S, the wax-based lubricating agent W is liquefied by the warming and outflows from the bearings 2.

Also, after assembling the spindle device 100, when the pre-conditioning interim operation of the rolling bearings 2 is performed at an early stage, if the wax-based lubricating agent W is enclosed in the bearing space S, the heat is generated beyond expected due to a stirring resistance of the lubricating agent in the vicinity of the rolling surface even though the wax-based lubricating agent W remains without outflow upon the incorporation of the bearings, and the lubricating agent outflows from the bearings 2.

On the other hand, in the embodiment, since the grease G is enclosed in the bearing space S, like the related art, even when the rolling bearing 2 is warmed upon the incorporation of the bearings or the heat is generated from the rolling bearing 2 upon the pre-conditioning interim operation, the grease G is not liquefied, so that the outflow from the bearing is not caused.

Also, in the spindle device 100 after the assembling, at an early stage of rotation, the grease G contributes to the lubrication, and then a slight amount of the wax-based lubricating agent W is periodically supplied from the lubricating agent supply device 3. After the lubrication, the grease G is discharged from the inside of the rolling bearing 2 to the housing 30, and is gradually replaced with the wax-based lubricating agent W. Thereafter, the inside of the bearing is lubricated by a mixture of the grease G of the early stage and the wax-based lubricating agent W or only by the wax-based lubricating agent W.

As described above, according to the spindle device 100 of the embodiment, the lubricating agent that is to be supplied from the lubricating agent supply device 3 is the wax-based lubricating agent W containing the lubricating oil and the wax and capable of reversibly changing between the liquid state when a temperature exceeds the liquefaction point and the semi-solid state when the temperature does not exceed the liquefaction point, the liquefaction point being a predetermined temperature within the temperature range of 25°C to 60°C, and the grease G including the base oil component, which has the infiltrative property and affinity with the wax-based lubricating agent W, is enclosed in the bearing space S of the rolling bearing 2. Thereby, it is possible to stably supply the lubricating agent from the lubricating agent supply device 3 to the rolling bearing 2 even upon operation while maintaining the handling property upon incorporation of the bearing or upon pre-conditioning interim operation of the bearing.

Also, the ratios of the lubricating oil and the wax of the wax-based lubricating agent are 4 to 40 mass% of wax and 96 to 60 mass% of lubricating oil with respect to the total amount of the lubricating oil and the wax. Therefore, it is possible to enable the reversible change between the liquid state and the semi-solid state and to secure the flowability.

In the meantime, the present invention is not limited to the embodiment, and can be appropriately modified and improved. In addition, the materials, shapes, sizes, numbers, arrangement places and the like of the respective constitutional elements of the embodiment are arbitrary and are not particularly limited inasmuch as it is possible to implement the present invention.

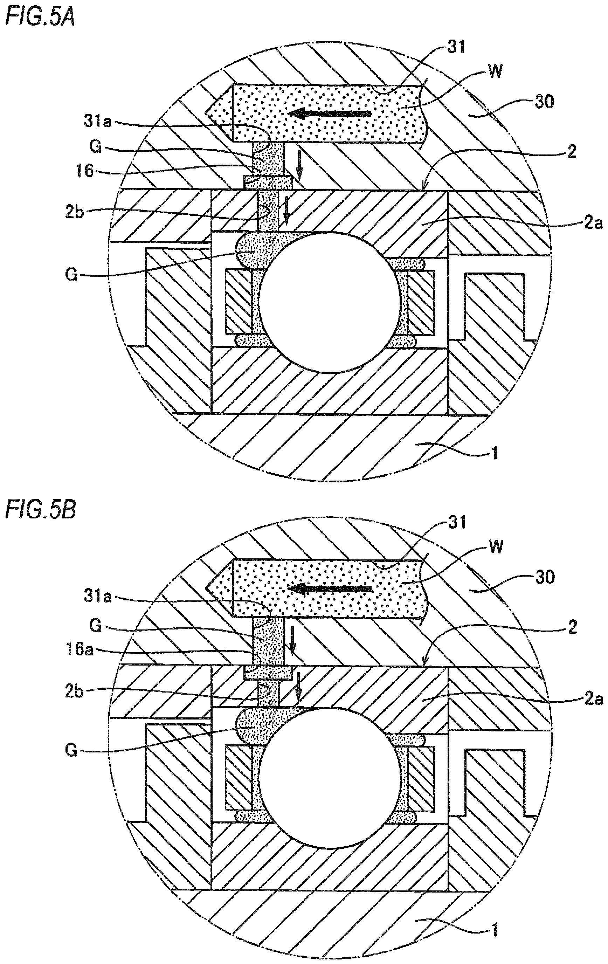

For example, as shown in a modified embodiment of FIG. 5A, an inner peripheral surface of the housing 30 to which the supply hole 31a opens may be formed with a circumferential groove 16 configured to communicate with the replenishing hole 2b of the outer ring 2a. Alternatively, as shown in another modified embodiment of FIG. 5B, an outer peripheral surface of the outer ring 2a to which the replenishing hole 2b opens may be formed with a circumferential groove 16a configured to communicate with the supply hole 31a of the housing 30. In this case, the grease G may be enclosed in the circumferential groove 16, 16a. Alternatively, the wax-based lubricating agent other than the grease may be enclosed in the supply hole 31a, as necessary.

Also, the wax-based lubricating agent is liquefied in the vicinity of the bearing and is supplied into the bearing. Therefore, even when the replenishing hole 2b opens at any place in the bearing, the replenishment is appropriately performed. However, in the embodiment, the replenishing hole 2b is disposed to overlap with a rolling element, as seen from a radial direction. In this case, since the supplied lubricating agent is likely to be directly attached to the rolling element, it is possible to further improve the lubricating characteristic.

### Description of Reference Numerals

- 1:: spindle
- 2:: rolling bearing
- 2a:: outer ring
- 2b:: replenishing hole
- 3:: lubricating agent supply device
- 7:: spacer
- 9:: lubricating agent storing groove
- 10, 15:: cooling path
- 12:: stator
- 13:: rotor
- 20:: cooling liquid supply device
- 21:: supply pipe
- 22:: discharge pipe
- 30:: housing
- 31:: supply path
- 31a:: supply hole
- 100:: spindle device
- G:: grease
- W:: wax-based lubricating agent

## Claims

1. A spindle device (100) including:
a spindle (1),
a housing (30),
a rolling bearing (2) configured to rotatably support the spindle (1) to the housing (30), and
a lubricating agent supply device (3) comprising lubricating agent (W), configured to supply the lubricating agent (W) to the rolling bearing (2) via a supply path provided in the housing (30),
**characterised in that**
the lubricating agent (W) that is to be supplied from the lubricating agent supply device (3) is a wax-based lubricating agent containing a lubricating oil and a wax and capable of reversibly changing between a liquid state when a temperature exceeds a liquefaction point and a semi-solid state when the temperature does not exceed the liquefaction point, the liquefaction point being a predetermined temperature within a temperature range of 25°C to 60°C, and
wherein a grease including a base oil component, which has an infiltrative property and affinity with the wax-based lubricating agent (W), is enclosed in a bearing space of the rolling bearing (2).

2. The bearing device according to claim 1, wherein ratios of the lubricating oil and the wax of the wax-based lubricating agent (W) are 4 to 40 mass% of wax and 96 to 60 mass% of lubricating oil with respect to a total amount of the lubricating oil and the wax.

3. A machine tool including the spindle device (100) according to claim 1 or 2.

## Patentansprüche

1. Spindelvorrichtung (100), die beinhaltet:
eine Spindel (1),
ein Gehäuse (30),
ein Rollenlager (2), das dazu ausgelegt ist, die Spindel (1) drehbar an dem Gehäuse (30) zu lagern, und
eine Schmiermittel-Zufuhrvorrichtung (3), umfassend ein Schmiermittel (W), die dazu ausgelegt ist, das Schmiermittel (W) zu dem Rollenlager (2) über einen Zufuhrweg zu leiten, der in dem Gehäuse (30) vorgesehen ist,
**dadurch gekennzeichnet, dass**
das Schmiermittel (W), das von der Schmiermittel-Zufuhrvorrichtung (3) zugeführt werden soll, ein wachsbasiertes Schmiermittel ist, das ein Schmieröl und ein Wachs enthält und dazu in der Lage ist, reversibel zwischen einem flüssigen Zustand, wenn eine Temperatur einen Verflüssigungspunkt überschreitet, und einem halbfesten Zustand zu wechseln, wenn die Temperatur den Verflüssigungspunkt nicht überschreitet, wobei der Verflüssigungspunkt eine vorgegebene Temperatur in einem Temperaturbereich von 25 °C bis 60 °C ist, und
wobei ein Fett mit einer Basisölkomponente, die eine infiltrierende Eigenschaft und eine Affinität zu dem wachsbasierten Schmiermittel (W) aufweist, in einem Lagerraum des Rollenlagers (2) eingeschlossen ist.

2. Lagervorrichtung nach Anspruch 1, wobei die Verhältnisse des Schmieröls und des Wachses des wachsbasierten Schmiermittels (W) 4 bis 40 Ma% an Wachs und 96 bis 60 Ma% an Schmieröl bezüglich einer Gesamtmenge des Schmieröl und des Wachses betragen.

3. Werkzeugmaschine mit der Spindelvorrichtung (100) nach Anspruch 1 oder 2.

## Revendications

1. Dispositif de broche (100) comprenant:
une broche (1),
un logement (30),
un palier à roulement (2) configuré pour supporter en rotation la broche (1) vers le logement (30), et
un dispositif d'alimentation en agent lubrifiant (3) comprenant un agent lubrifiant (W), configuré pour fournir l'agent lubrifiant (W) au palier à roulement (2) via un chemin d'alimentation prévu dans le logement (30), **caractérisé en ce que**
l'agent lubrifiant (W) qui doit être fourni par le dispositif d'alimentation en agent lubrifiant (3) est un agent lubrifiant à base de cire contenant une huile lubrifiante et une cire et capable de changer de manière réversible entre un état liquide lorsqu'une température dépasse un point de liquéfaction et un état semi-solide lorsque la température ne dépasse pas le point de liquéfaction, le point de liquéfaction étant une température prédéterminée dans une gamme de températures de 25°C à 60°C, et
dans laquelle une graisse comprenant un composant huile de base, qui a une propriété d'infiltration et une affinité avec l'agent lubrifiant à base de cire (W), est enfermée dans un espace de palier du palier à roulement (2).

2. Dispositif de palier selon la revendication 1, dans lequel les rapports de l'huile lubrifiante et de la cire de l'agent lubrifiant à base de cire (W) sont de 4 à 40 % en masse de cire et de 96 à 60 % en masse d'huile lubrifiante par rapport à une quantité totale de l'huile lubrifiante et de la cire.

3. Machine-outil comprenant le dispositif de broche (100) selon les revendications 1 ou 2.
